# EUROPÄISCHE PATENTSCHRIFT

(11) **EP 0 838 363 B1**
(45) Veröffentlichungstag und Bekanntmachung des Hinweises auf die Patenterteilung: **28.11.2001**
(21) Anmeldenummer: 97111158.8
(22) Anmeldetag: 03.07.1997
(51) Int. Cl.: B60K 31/04

(54) **Verfahren und Vorrichtung zur Steuerung der Fahrgeschwindigkeit eines Fahrzeugs**
Method and device for controlling the travelling speed of a vehicle
Méthode et dispositif pour régler la vitesse de déplacement d'un véhicule automobile

(30) Priorität: 02.10.1996 DE 19640694
(43) Veröffentlichungstag der Anmeldung: 29.04.1998
(73) Patentinhaber: ROBERT BOSCH GMBH, 70442 Stuttgart (DE)
(72) Erfinder: Winner, Hermann, 76229 Karlsruhe (DE); Witte, Stefan, 32425 Minden (DE)

(56) Entgegenhaltungen:
- EP-A- 0 624 488
- DE-A- 4 338 399
- US-A- 4 622 636

## Beschreibung

### Stand der Technik

Die Erfindung betrifft ein Verfahren und eine Vorrichtung zur Steuerung der Fahrgeschwindigkeit eines Fahrzeugs gemäß den Oberbegriffen der unabhängigen Patentansprüchen.

Verfahren und Vorrichtungen zur Steuerung der Geschwindigkeit von Fahrzeugen sind aus dem Stand der Technik in vielfältiger Abwandlung bekannt. Beispielsweise beschreibt die Veröffentlichung SAE Paper Nr. 96 10 10 "Adaptive Cruise Control, System Aspects and Development Trends, 1996" eine Geschwindigkeitsregelung unter Berücksichtigung des Abstandes zu vorausfahrenden Fahrzeugen. Dabei gibt der Fahrer über einen Bedienhebel mit den bei Fahrgeschwindigkeitsreglern üblichen Funktionen Setzen, Wiederaufnahme, Beschleunigen, etc. die Sollgeschwindigkeit des Fahrzeugs vor, die bei nicht vorhandenem Frontfahrzeug vergleichbar zu einem herkömmlichen Fahrgeschwindigkeitsregler eingeregelt wird, indem aus der Differenz zwischen Sollgeschwindigkeit und Fahrgeschwindigkeit eine Sollbeschleunigung berechnet wird. Erkennt ein Radarsystem ein vorausfahrendes Fahrzeug, werden der Abstand und die Relativgeschwindigkeit zu diesem Fahrzeug ermittelt. Die Regelaufgabe besteht in diesem Fall darin, die Relativgeschwindigkeit auf Null einzuregeln und dabei gleichzeitig einen geschwindigkeitsabhängigen Sollabstand einzuhalten. Parameter zur Bestimmung des Sollabstandes (Zeitlücke) sind vom Fahrer einstellbar. Dieser Folgeregler bestimmt aus den genannten Größen eine Sollbeschleunigung, die jedoch durch die Sollbeschleunigung des Fahrgeschwindigkeitsregelteils begrenzt wird, so daß auch in der Folgeregelung die vorgegebene Sollgeschwindigkeit nicht überschritten werden kann. Abstands- und Fahrgeschwindigkeitsregler geben je nach Betriebszustand Sollwerte für die Beschleunigung (bzw. Verzögerung) des Fahrzeugs vor, die durch Beeinflussung des Motors des Fahrzeugs und/oder der Bremsen eingestellt werden.

In der DE-A1 43 38 399 (Oberbegriffe der unabhängigen Patentansprüche) wird ein Fahrgeschwindigkeitsregler beschrieben, der auf der Basis der Differenz zwischen Sollund Istgeschwindigkeit eine Sollbeschleunigung des Fahrzeugs vorgibt, welche durch Steuerung des Motors und/oder durch Betätigen der Radbremsen des Fahrzeugs eingestellt wird.

Die Auslegung derartiger Regler stellt einen Kompromiß zwischen zügiger Reaktion auf die Eingangsdaten und träger Reaktion dar, um den Fahrer nicht zu verunsichern und/oder den Komfort zu erhalten. Daher ist in der Regel die Beschleunigung und/oder die Beschleunigungsänderung gegenüber den Möglichkeiten des Fahrzeugs deutlich gedrosselt. Dabei taucht das Problem auf, daß z. B. bei stark beschleunigendem, vorausfahrendem Fahrzeug oder bei Überhol- und Ausschermanöver die Beschleunigungsdynamik des Reglers oftmals deutlich unterhalb der Erwartung des Fahrers bleibt. Es ist Aufgabe der Erfindung, Maßnahmen anzugeben, welche bei einer Fahrgeschwindigkeitssteuerung die Dynamik beim Beschleunigen und/oder Verzögern verbessern, ohne den Fahrer zu verunsichern bzw. den Komfort zu reduzieren.

Dies wird durch die kennzeichnenden Merkmale der unabhängigen Patentansprüche erreicht.

### Vorteile der Erfindung

Die erfindungsgemäße Lösung erlaubt einen Eingriff zur Erhöhung des Beschleunigungs- bzw. der Verzögerungsdynamik eines Fahrgeschwindigkeitssteuersystems.

Besonders vorteilhaft ist, daß dieser Eingriff durch ein vom Fahrer betätigbares Bedienelement durchgeführt wird, so daß eine verunsichernde Funktionsweise des Steuersystems ausgeschlossen werden kann. Auf diese Weise wird zur Veränderung der Dynamik des Steuersystems der Fahrer eingebunden, wodurch eine größere Sicherheit bei dynamischen Beschleunigungen bzw. Verzögerungen erreicht wird.

Besonders vorteilhaft ist der Einsatz der erfindungsgemäßen Lösung bei einem Steuersystem mit Folgeregelung (ACC), wobei auch bei einem derartigen Steuersystem neben der normalen eine sportliche Fahrweise vom Fahrer eingestellt werden kann.

In einem weiteren Ausführungsbeispiel eines Fahrgeschwindigkeitsreglers mit Folgeregler werden die Grenzwerte für die Dynamik abhängig von dem in einer Getriebesteuereinheit gebildeten Fahrertypfaktor verändert. Dadurch wird der Aufwand erheblich verringert und die Dynamik des Steuersystems automatisch an das Fahrerverhalten angepaßt. Der Fahrertyp wird in einer Ausführung auch von einer anderen Einheit (z.B. dem ACC) gebildet.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt ein Übersichtsschaltbild einer Steuereinheit zur Steuerung der Geschwindigkeit eines Fahrzeugs, die in Figur 2 am Beispiel eines adaptiven Fahrgeschwindigkeitsreglers (Fahrgeschwindigkeitsregler mit Abstandsregler) näher ausgeführt ist. Figur 3 zeigt die erfindungsgemäße Lösung anhand eines Flußdiagramms, welches ein in einem Mikrocomputer der Steuereinheit ablaufendes Programm darstellt.

### Beschreibung von Ausführungsbeispielen

Die erfindungsgemäße Lösung wird nachstehend anhand des bevorzugten Anwendungsfalls eines adaptiven Fahrgeschwindigkeitsreglers dargestellt. Sie wird jedoch auch in vorteilhafter Weise im Rahmen weiterer Ausführungsformen einer Fahrgeschwindigkeitssteuerung, z.B. eines herkömmlichen Fahrgeschwindigkeitsreglers, eingesetzt.

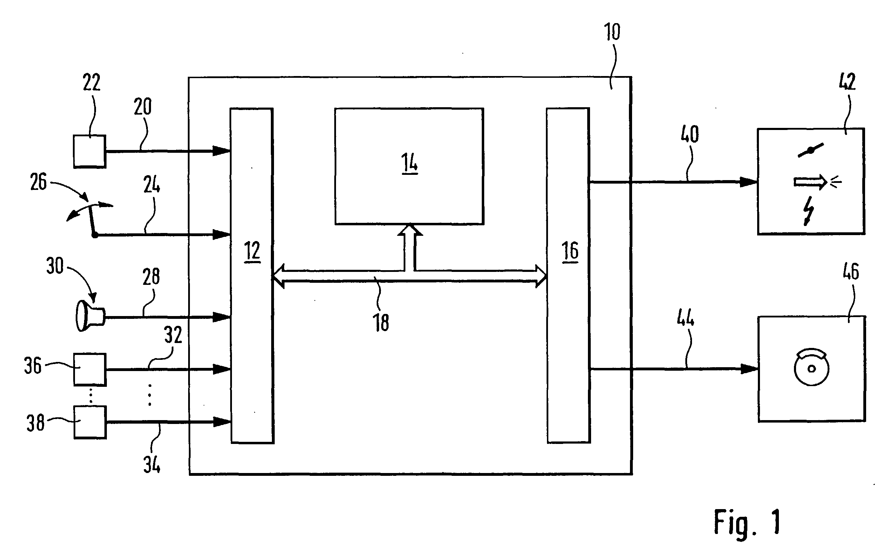

Figur 1 zeigt ein Übersichtsschaltbild einer Steuereinheit 10 für einen adaptiven Fahrgeschwindigkeitsregler. Die Steuereinheit 10 umfaßt eine Eingangsschaltung 12, wenigstens einen Mikrocomputer 14 und eine Ausgangsschaltung 16. Diese Elemente sind über ein Kommunikationssystem 18 zum Datenund Informationsaustausch miteinander verbunden. Der Eingangsschaltung 12 sind Eingangsleitungen 20 von einer Meßeinrichtung 22 zur Erfassung der Fahrgeschwindigkeit, eine Eingangsleitung 24 von wenigstens einem vom Fahrer betätigbaren Bedienelement 26 zur Vorgabe des Betriebszustandes des Fahrgeschwindigkeitsreglers und des Sollabstandes und eine Eingangsleitung 28 von einer Abstandsmeßeinrichtung 30, vorzugsweise einem Radargerät, zugeführt. Ferner werden der Eingangsschaltung 12 weitere Eingangsleitungen 32 bis 34 von Meßeinrichtungen 36 bis 38 zur Erfassung weiterer Betriebsgrößen des Fahrzeugs, die bei der adaptiven Fahrgeschwindigkeitsregelung Verwendung finden, zugeführt. Derartige Betriebsgrößen sind beispielsweise Lenkwinkel, Querbeschleunigung, etc. Die Steuereinheit 10, dort der wenigstens eine Mikrocomputer 14, beeinflußt im Rahmen der adaptiven Fahrgeschwindigkeitsregelung über wenigstens eine Ausgangsleitung 40 und entsprechende Stelleinrichtungen 42 (z. B. elektronisches Motorsteuergerät) die Leistung der Antriebseinheit des Fahrzeugs. Ferner beeinflußt die Steuereinheit 10 in einem bevorzugten Ausführungsbeispiel über die Eingangsleitung 44 und entsprechenden Stellelementen 46 (z. B. einer Bremsanlage mit ABS/ASR-Elementen) die Bremskraft an den Radbremsen des Fahrzeugs.

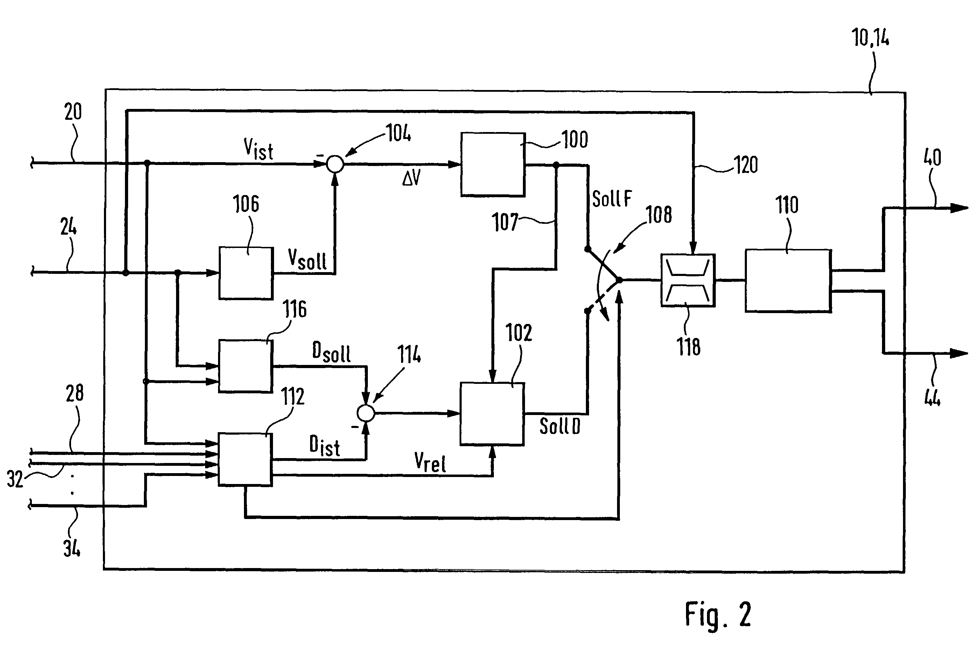

Das aus dem eingangs genannten Stand der Technik bekannte Grundprinzip der adaptiven Fahrgeschwindigkeitsregelung ist in Figur 2 anhand eines Blockschaltbildes dargelegt, welches die grundsätzlichen Zusammenhänge bei der adaptiven Fahrgeschwindigkeitsregelung darstellt. Die Realisierung dieser Fahrgeschwindigkeitsregelung erfolgt im bevorzugten Ausführungsbeispiel als ein Programm des Mikrocomputers 14, durch welche die in Figur 2 dargestellten Zusammenhänge realisiert werden.

Der dargestellte adaptive Fahrgeschwindigkeitsregler weist zwei Grundfunktionen auf, den Fahrgeschwindigkeitsregler 100 und den Abstandsregler (Folgeregler) 102. Dem in herkömmlicher Weise realisierten Fahrgeschwindigkeitsregler 100 wird von einer Vergleichsstelle 104 die Differenz ΔV zwischen der Sollgeschwindigkeit Vₛₒₗₗ und der Istgeschwindigkeit Vᵢₛₜ zugeführt. Die Sollgeschwindigkeit Vₛₒₗₗ wird dabei abhängig von dem Betätigungszustand des Bedienelements 21 in einer Auswahlstufe 106 bestimmt. So wird beispielsweise im Betriebszustand Setzen der aktuelle Istgeschwindigkeitswert als Sollgeschwindigkeit übernommen, im Betriebszustand Beschleunigen zeitlich veränderliche Rampen der Sollgeschwindigkeit vorgegeben, etc. Das vom Fahrgeschwindigkeitsregler 100 in Abhängigkeit der Geschwindigkeitsdifferenz nach Maßgabe einer vorgegebenen Regelstrategie (z.B. PD-Regelung) gebildete Ausgangssignal SollF wird an ein Schaltelement 108 und über die Leitung 107 an den Regler 102 abgegeben. Das Schaltelement 108 leitet je nach Schaltstellung das Ausgangssignal SollF des Fahrgeschwindigkeitsreglers oder das Ausgangssignal SollD des Abstandsreglers über eine Begrenzungsstufe 118 an eine Auswahlstufe 110. Letztere bildet abhängig vom zugeführten Ausgangssignal ein Steuersignal zur Beeinflussung der Motorleistung (Ausgangsleitung 40) und/oder der Bremskraft (Ausgangsleitung 44).

Die Abstandsregelung umfaßt eine Auswahlstufe 112, die in Abhängigkeit der über die Eingangsleitung 28 zugeführten Signale der Radareinheit, der Istgeschwindigkeit und weiterer über die Leitungen 32 bis 34 zugeführte Größen, wie z. B. Lenkwinkel, Gierrate, Beschleunigung des Fahrzeugs, etc. das relevante Fahrzeug, welches als Frontfahrzeug zur Abstandsregelung zu verwenden ist, ermittelt. Dabei wird der zu erwartende Kurs des Fahrzeugs z.B. anhand der Geschwindigkeit und des Lenkwinkels bestimmt. Der Radarsensor liefert den Abstand zu den erfaßten Objekten, deren relative Geschwindigkeit und den Winkel zu den verschiedenen Objekten, so daß aus einem Vergleich der gelieferten Daten mit dem zu erwartenden zukünftigen Kurs des Fahrzeugs das relevante Fahrzeug ausgewählt wird. Dann werden die vom Radarsensor ermittelten Werte für den Abstand Dᵢₛₜ zum relevanten Fahrzeug und dessen Relativgeschwindigkeit Vᵣₑₗ ausgegeben. Der Istabstand wird einer Vergleichsstufe 114 zugeführt, in der die Differenz zwischen dem vom Fahrer vorgegebenen Sollabstand Dₛₒₗₗ und dem ermittelten Istabstand gebildet und dem Regler 102 zugeführt wird. Diesem wird ferner von der Auswahlstufe 112 die Relativgeschwindigkeit übermittelt. Der Sollabstand zum relevanten vorausfahrenden Fahrzeug wird in einer Auswahlstufe 116 in Abhängigkeit eines Betätigungssignals des Fahrers, welches den Sollzeitabstand zum vorausfahrenden Fahrzeug in Sekunden festlegt, und der Istgeschwindigkeit ermittelt. Der Regler 102 bildet ein Ausgangssignal SollD, mit welchem sowohl die Abstandsdifferenz als auch die relative Geschwindigkeit des vorausfahrenden Fahrzeugs gegen 0 geführt wird. Damit der Abstandsregler die vorgegebene Sollgeschwindigkeit nicht überschreiten kann, wird ihm die Sollgröße der Fahrgeschwindigkeitsreglers 100 zugeführt. Das Ausgangssignal SollD wird dem Schaltelement 108 zugeführt. Dieses Schaltelement wird von der Auswahlstufe 112 in die strichliert gezeichnete Stellung umgeschaltet, wenn ein vorausfahrendes Fahrzeug erkannt wurde, zu dem der Abstand einzustellen ist. Dies bedeutet, daß der Fahrgeschwindigkeitsregler 100 gemäß seinen Eingangsgrößen Motorleistung und Bremsleistung bestimmt, wenn kein Fahrzeug zur Abstandsregelung ermittelt wurde, während bei erkanntem vorausfahrendem Fahrzeug der Abstandsregler 102 Motorleistung bzw. Bremsleistung steuert. Die Auswahlstufe 110 entscheidet abhängig vom zugeführten Sollwert, der im wesentlichen einer Sollbeschleunigung bzw. Verzögerung entspricht, ob die Motorsteuerung oder die Bremsensteuerung aktiviert wird. Reicht eine Reduktion der Motorleistung zum Einhalten der Sollverzögerung nicht aus, so werden die Bremsen aktiviert, andernfalls wird die Verzögerungssteuerung über eine Steuerung der Motorleistung durchgeführt.

Der an die Auswahlstufe 110 abgegebene Sollwert wird ferner in der Begrenzungseinheit 118 auf einen maximalen Beschleunigungs- bzw. Verzögerungswert begrenzt. Darüber hinaus kann in einem anderen Ausführungsbeispiel zusätzlich oder alternativ die Beschleunigungsänderung bzw. die Verzögerungsänderung begrenzt sein.

Die in der Begrenzungsstufe 118 vorgegebenen Grenzwerte sind abhängig von dem vom Fahrer gewünschten Dynamikverhalten veränderbar. Vorzugsweise werden die Grenzwerte bei einem gewünschten sportlicheren Verhalten erhöht, so daß eine größere maximale Beschleunigung des Fahrzeugs und/oder eine größere maximale Beschleunigungsänderung und/oder eine größere maximale Verzögerung und/oder maximale Verzögerungsänderung zugelassen ist. In einem anderen Ausführungsbeispiel werden die bestehenden Grenzwerte aufgehoben.

Der Wunsch des Fahrers nach einer höheren Dynamik kann auf verschiedene Weise erfaßt werden. Vorzugsweise ist wenigstens einer, vom Fahrer betätigbarer Schalter vorgesehen, bei dessen Betätigung die Grenzwerte verändert werden, bei dessen Lösen wieder die alten Grenzwerten eingestellt werden. In einem bevorzugten Ausführungsbeispiel ist zu diesem Zweck wenigstens einer der vorhandenen Bedienschalter (z. B. der Setzschalter oder der Schalter für die Sollzeitlücke) mit einer Doppelfunktion belegt. Für ein derartiges Beispiel ist in Figur 2 eine Leitung 120 vorgesehen, die von der Leitung 24 abzweigt. Betätigt der Fahrer in vorgesehener Weise diesen Schalter so wird der obere Grenzwert für die Beschleunigung bzw. die Beschleunigungsänderung erhöht. Nach Lösen des Schalters fallen diese Grenzen sofort oder zeitlich verzögert wieder auf ihre alten Werte zurück. Werden auch die entsprechenden Grenzwerte für die Verzögerung beeinflußt, so wird das entsprechende Signal von einem anderen Schalter abgeleitet.

In einem Ausführungsbeispiel ist vorgesehen, zur Veränderung der Grenzwerte neue Schaltelemente einzuführen, bei deren Betätigung die Grenzwerte erhöht, bei deren Lösen die Grenzwerte wieder reduziert werden.

In einem anderen Ausführungsbeispiel wird anstelle des Status wenigstens eines vorhandenen Bedienelements des Fahrgeschwindigkeitsregelsystems bzw. anstelle wenigstens eines neuen Schaltelements der Fahrerwunsch bezüglich einer sportlicheren Fahrweise von einem entsprechenden Schaltelement einer Getriebesteuerung bzw. von dem von einer solchen Getriebesteuerung ermittelten Fahrertypfaktor abgeleitet.

Das Zurückführen auf die alten Grenzwerte erfolgt im bevorzugten Ausführungsbeispiel verzögert, in einem anderen Ausführungsbeispiel sofort.

Die Wirkung der geänderten Grenzwerte wird nur dann deutlich, wenn die Fahrgeschwindigkeitsregelung eine Beschleunigung, Beschleunigungsänderung, Verzögerung und/oder Verzögerungsänderung vornimmt, die über den alten Grenzwerten liegt. Solange sich die Fahrzeugdynamik unterhalb der alten Grenzwerte bewegt, ändert sich am Fahrverhalten des Fahrzeugs nichts. Durch diese Maßnahme wird der Fahrkomfort trotz verbesserter Dynamikmöglichkeiten des Fahrzeugs erhalten.

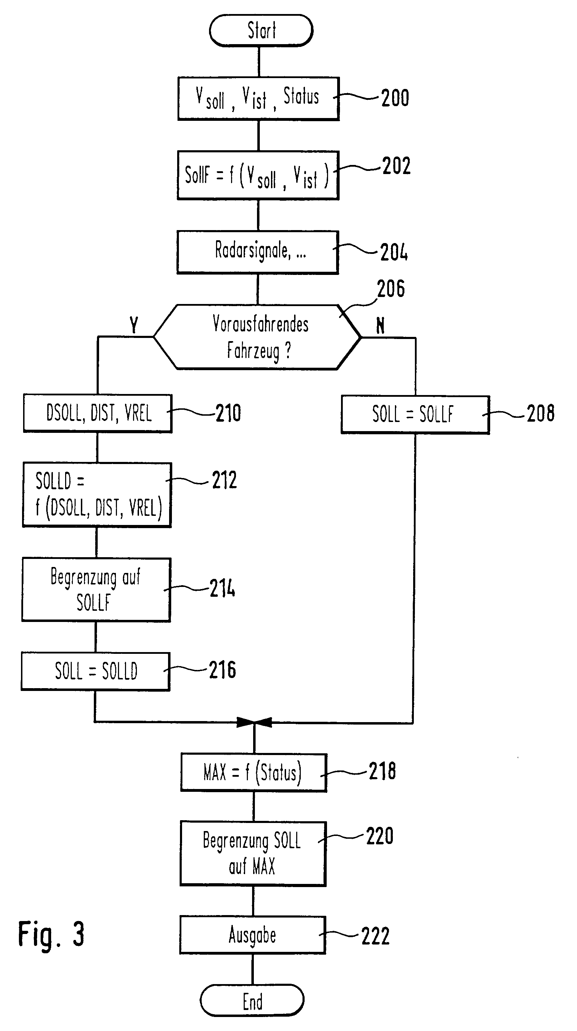

Die erfindungsgemäße Lösung ist bevorzugt als Programm eines Mikrocomputers realisiert. Figur 3 zeigt ein Flußdiagramm, welches in vorgegebenen Zeitintervallen gestartet wird und eine bevorzugte Realisierung der erfindungsgemäßen Lösung darstellt.

Im ersten Schritt 200 wird die eingespeicherte Sollgeschwindigkeit Vₛₒₗₗ, die Istgeschwindigkeit Vᵢₛₜ sowie der Status eines vom Fahrer betätigbaren Schaltelements zur Dynamikerhöhung eingelesen. Im darauffolgenden Schritt 202 wird in bekannter Weise nach Maßgabe einer vorgegebenen Regelstrategie der vom Fahrgeschwindigkeitsregler ermittelte Sollwert SollF auf der Basis der Sollgeschwindigkeit und der Istgeschwindigkeit gebildet. Im bevorzugten Ausführungsbeispiel handelt es sich bei diesem Sollwert um einen Sollbeschleunigungswert. In anderen Ausführungsbeispielen repräsentiert der Sollwert andere Betriebsgrößen, beispielsweise ein Solldrehmoment, eine Solleistung, eine Solluftzufuhr, etc. In dem auf den Schritt 202 folgenden Schritt 204 werden die zur Identifikation eines möglicherweise vorausfahrenden Fahrzeuges, zur Erfassung dessen Abstands und dessen Relativgeschwindigkeit notwendigen Betriebsgrößen und Signale des Radargeräts erfaßt. Im darauffolgenden Schritt 206 wird überprüft, ob ein vorausfahrendes Fahrzeug detektiert wurde. Ist dies nicht der Fall, wird gemäß Schritt 208 analog zur konventionellen Fahrgeschwindigkeitsregelung der von der Motorsteuerung bzw. der Bremsensteuerung einzustellende Sollwert SOLL auf den im Schritt 202 vom Fahrgeschwindigkeitsregler ermittelten Sollwert SOLLF gesetzt.

Wurde gemäß Schritt 206 ein vorausfahrendes Fahrzeug detektiert, so tritt die Folgeregelung in Kraft. Dabei wird zunächst im Schritt 210 der vom Fahrer über eine Zeitlücke zum vorausfahrenden Fahrzeug vorgegebene Sollabstand DSOLL, der Istabstand DIST sowie die Relativgeschwindigkeit VREL des vorausfahrenden Fahrzeuges ermittelt. Danach wird im Schritt 212 der Sollwert des Folgereglers SOLLD nach Maßgabe einer vorgegebenen Regelstrategie auf der Basis des Abstandssollwertes DSOLL, des Abstandistwertes DIST sowie der Relativgeschwindigkeit VREL gebildet. Dabei wird die Relativgeschwindigkeit dem Wert 0 angenähert und der Abstand auf den Sollabstand eingeregelt. Im darauffolgenden Schritt 214 wird der vom Folgeregler ermittelte Sollwert SOLLD auf den vom Fahrgeschwindigkeitsregler im Schritt 202 ermittelte Sollwert SOLLF begrenzt, damit die eingestellte Sollgeschwindigkeit vom Abstandsregler nicht überschritten werden kann. Im darauffolgenden Schritt 216 wird der durch die Motorsteuerung bzw. die Bremsensteuerung einzustellende Sollwert SOLL auf den vom Folgeregler bestimmten, ggf. begrenzten Sollwert SOLLD gesetzt. Nach den Schritten 208 und 206 wird im Schritt 218 der Maximalwert MAX für die Beschleunigung bzw. Verzögerung des Fahrzeugs abhängig vom Status des vom Fahrer betätigbaren Schaltelements aus einer vorgegebenen Tabelle ausgelesen. Im darauffolgenden Schritt 220 wird dann der Sollwert SOLL auf diesen Maximalwert begrenzt. Dies erfolgt im bevorzugten Ausführungsbeispiel, in dem der Sollwert eine Beschleunigung bzw. Verzögerung repräsentiert, durch Begrenzung dieses Sollwerts, während in Fällen, in denen der Sollwert eine andere Größe repräsentiert, der Sollwert im Sinne einer Begrenzung der Beschleunigung bzw. Verzögerung des Fahrzeugs auf den Maximalwert korrigiert wird. Im darauffolgenden Schritt 222 wird der Sollwert an die Bremsen- bzw. Motorsteuerung abgegeben, der Programmteil beendet und zur vorgegebener Zeit erneut eingeleitet.

## Patentansprüche

1. Verfahren zur Steuerung der Fahrgeschwindigkeit eines Fahrzeugs, wobei die Fahrzeuggeschwindigkeit im Rahmen einer zur Annäherung eines Istwertes an einen Sollwert dienenden Regelung gesteuert wird, wobei bei einem dynamischen Betriebszustand während der Regelung die Änderung der Geschwindigkeit begrenzt wird, **dadurch gekennzeichnet, daß** diese Begrenzung aufgehoben oder auf höhere Werte gesetzt wird abgängig vom Zustand wenigstens eines vom Fahrer betätigbaren Schaltelements.

2. Verfahren nach Anspruch 1, **dadurch gekennzeichnet, daß** die alten Grenzwerte wieder eingenommen werden, wenn das Schaltelement diesen Zustand verläßt.

3. Verfahren nach einem der vorhergehenden Ansprüche, **dadurch gekennzeichnet, daß** Grenzwerte für die Beschleunigung und/oder die Verzögerung und/oder die Beschleunigungsänderung und/oder die Verzögerungsänderung des Fahrzeugs vorgesehen sind.

4. Verfahren nach einem der vorhergehenden Ansprüche, **dadurch gekennzeichnet, daß** die Regelung eine Abstandsregelung ist, die den Abstand des Fahrzeugs von einem vorausfahrenden Fahrzeug auf einen vom Fahrer vorgegebenen Sollwert regelt und/oder eine herkömmliche Fahrgeschwindigkeitsregelung ist.

5. Verfahren nach einem der vorhergehenden Ansprüche, **dadurch gekennzeichnet, daß** das wenigstens eine Schaltelement ein vorhandenes Bedienelement für die Fahrgeschwindigkeitsteuerung ist.

6. Verfahren nach einem der vorhergehenden Ansprüche, **dadurch gekennzeichnet, daß** das wenigstens eine Schaltelement ein Schaltelement einer Getriebesteuerung zur Einstellung einer sportlicheren Fahrweise ist.

7. Verfahren zur Steuerung der Fahrgeschwindigkeit eines Fahrzeugs, wobei die Fahrzeuggeschwindigkeit im Rahmen einer kombinierten Fahrgeschwindigkeits- und Abstandsregelung gesteuert wird, wobei bei einem dynamischen Betriebszustand die Änderung der Geschwindigkeit begrenzt wird, **dadurch gekennzeichnet, daß** diese Begrenzung aufgehoben oder auf höhere Werte gesetzt abgängig von dem von Fahrer gewünschten dynamischen Verhalten des Fahrzeugs.

8. Verfahren nach Anspruch 7, **dadurch gekennzeichnet, daß** das dem von Fahrer gewünschten dynamischen Verhalten des Fahrzeugs aus einem Fahrertypsignal einer adaptiven Getriebesteuerung oder von wenigstens einem, vom Fahrer betätigbaren Schaltelement abgeleitet wird.

9. Verfahren nach einem der vorhergehenden Ansprüche, **dadurch gekennzeichnet, daß** der von der Regelung abgegebene Sollwert ein Beschleunigungs- oder Verzögerungssollwert ist, der einer Motorsteuerung und/oder einer Bremsensteuerung zugeführt wird, und der auf den veränderbaren Grenzwert begrenzt ist.

10. Vorrichtung zur Steuerung der Fahrgeschwindigkeit eines Fahrzeugs, mit einem Regler, der die Fahrgeschwindigkeit zur Annäherung eines Istwertes an einen Sollwert steuert, mit Begrenzungsmitteln, die die Änderung der Geschwindigkeit während der Regelung begrenzen, **dadurch gekennzeichnet, daß** wenigstens ein Schaltelement vorgesehen ist, welches vom Fahrer in einem Schaltzustand umschaltbar ist, und die Begrenzungsmittel die Begrenzung abhängig vom Schaltzustand des Schaltelements aufheben oder auf höhere Werte setzen.

11. Vorrichtung zur Steuerung der Fahrgeschwindigkeit eines Fahrzeugs, mit einer kombinierten Fahrgeschwindigkeits- und Abstandsregelung, mit Begrenzungsmitteln, die die Änderung der Geschwindigkeit während der Regelung begrenzen, **dadurch gekennzeichnet, daß** die Begrenzungsmittel die Begrenzung aufheben oder auf höhere Werte setzen abgängig von dem vom Fahrer gewünschten dynamischen Verhalten des Fahrzeugs.

## Claims

1. Method for controlling the travelling speed of a vehicle, the speed of the vehicle being controlled within the framework of a control system which serves to approximate an actual value to a setpoint value, in which case the change in the speed is limited during the control process when there is a dynamic operating state, **characterized in that** this limitation is cancelled or set to higher values as a function of the state of at least one switching element which can be activated by the driver.

2. Method according to Claim 1, **characterized in that** the old limiting values are resumed if the switching element leaves this state.

3. Method according to one of the preceding claims, **characterized in that** limiting values for the acceleration and/or deceleration and/or change in acceleration and/or change in deceleration of the vehicle are provided.

4. Method according to one of the preceding claims, **characterized in that** the control system is a distance control system which adjusts the distance of the vehicle from a vehicle travelling ahead to a setpoint value prescribed by the driver and/or is a conventional travelling speed control system.

5. Method according to one of the preceding claims, **characterized in that** the at least one switching element is an existing control element for controlling the travelling speed.

6. Method according to one of the preceding claims, **characterized in that** the at least one switching element is a switching element of a gearbox controller for setting a more sporty driving mode.

7. Method of controlling the travelling speed of a vehicle, the travelling speed being controlled within the scope of a combined travelling speed and distance control system, in which case the change in the speed is limited when there is a dynamic operating state, **characterized in that** this limitation is cancelled or set to higher values as a function of the dynamic behaviour of the vehicle desired by the driver.

8. Method according to Claim 7, **characterized in that** the dynamic behaviour of the vehicle which is desired by the driver is derived from a driver-type signal of an adaptive gearbox control system or by at least switching element which can be actuated by the driver.

9. Method according to one of the preceding claims, **characterized in that** the setpoint value which is output by the control system is an acceleration setpoint value or deceleration setpoint value which is fed to an engine control system and/or a brake control system and which is limited to the variable limiting value.

10. Device for controlling the travelling speed of a vehicle, having a controller which controls the travelling speed in order to approximate an actual value to a setpoint value, having limiting means which limit the change in speed during the control process, **characterized in that** at least one switching element is provided which can be switched over by the driver in a switched state, and the limiting means cancel the limitation as a function of the switched state of the switching element or set it to higher values.

11. Device for controlling the travelling speed of a vehicle, having a combined travelling speed and distance control system, having limiting means which limit the change in the speed during the control process, **characterized in that** the limiting means cancel the limitation or set it to higher values as a function of the dynamic behaviour of the vehicle desired by the driver.

## Revendications

1. Procédé pour régler la vitesse de déplacement d'un véhicule automobile, dont la vitesse est commandée dans le cadre d'une régulation servant à rapprocher une valeur réelle d'une valeur de consigne, avec limitation de la variation de la vitesse dans le cas d'un état de fonctionnement dynamique pendant la régulation,
**caractérisé en ce que**
cette limitation est levée ou portée à des valeurs plus hautes, en fonction de l'état d'au moins un élément de commutation actionnable par le conducteur.

2. Procédé selon la revendication 1,
**caractérisé en ce que**
les anciennes valeurs limites sont à nouveau observées quand l'élément de commutation quitte cet état.

3. Procédé selon une des revendications précédentes,
**caractérisé en ce que**
des valeurs limites sont prévues pour l'accélération et/ou la décélération et/ou la variation de l'accélération et/ou la variation de la décélération du véhicule.

4. Procédé selon une des revendications précédentes,
**caractérisé en ce que**
la régulation est une régulation de distance qui règle la distance séparant le véhicule d'un véhicule qui le précède à une valeur de consigne donnée à l'avance par le conducteur, et/ou une régulation usuelle de la vitesse du véhicule.

5. Procédé selon une des revendications précédentes,
**caractérisé en ce qu'**
au moins un élément de commutation est un organe de manoeuvre existant pour la commande de la vitesse de circulation.

6. Procédé selon une des revendications précédentes,
**caractérisé en ce qu'**
au moins un élément de commutation est un élément de commutation d'une commande de transmission destinée à régler un mode de conduite plus sportif.

7. Procédé pour régler la vitesse de déplacement d'un véhicule automobile, dont la vitesse est commandée dans le cadre d'une régulation combinée de la vitesse de la distance, avec limitation de la variation de vitesse dans le cas d'un état de fonctionnement dynamique,
**caractérisé en ce que**
cette limitation est levée ou portée à des valeurs plus hautes en fonction du comportement dynamique du véhicule que désire le conducteur.

8. Procédé selon la revendication 7,
**caractérisé en ce que**
le comportement dynamique désiré par le conducteur du véhicule est déduit d'un signal de type du conducteur donné par une commande adaptative de transmission, ou d'au moins un élément de commutation actionnable par le conducteur.

9. Procédé selon une des revendications précédentes,
**caractérisé en ce que**
la valeur de consigne donnée par la régulation est une valeur de consigne d'accélération ou de décélération, qui est adressée à une commande de moteur et/ou à une commande de freins, et qui est limitée à la valeur limite variable.

10. Dispositif pour régler la vitesse de déplacement d'un véhicule automobile, comprenant un régulateur qui commande la vitesse du véhicule de manière à rapprocher une valeur réelle d'une valeur de consigne, et des moyens de limitation de la variation de la vitesse pendant la régulation,
**caractérisé en ce qu'**
il est prévu au moins un élément de commutation dont l'état de commutation peut être modifié par le conducteur, et les moyens de limitation, en fonction de l'état que présente l'élément de commutation, font disparaître la limitation ou la portent à des valeurs plus élevées.

11. Dispositif pour régler la vitesse de déplacement d'un véhicule automobile, comprenant un régulateur qui commande la vitesse du véhicule de manière à rapprocher une valeur réelle d'une valeur de consigne, et des moyens de limitation de la variation de la vitesse pendant la régulation,
**caractérisé en ce que**
les moyens de limitation font disparaître la limitation ou la portent à des valeurs plus élevées en considération du comportement dynamique du véhicule que souhaite le conducteur.
